# EUROPÄISCHE PATENTSCHRIFT

(11) **EP 2 486 513 B1**
(45) Veröffentlichungstag und Bekanntmachung des Hinweises auf die Patenterteilung: **11.09.2013**
(21) Anmeldenummer: 10778834.1
(22) Anmeldetag: 24.09.2010
(51) Int. Cl.: G08G 1/0962, G06K 9/00

(54) **FAHRERASSISTENZSYSTEM FÜR EIN KRAFTFAHRZEUG MIT EINER KAMERA ZUR ERKENNUNG VON FAHRBAHNMARKIERUNGEN**
DRIVER ASSISTANCE SYSTEM FOR A VEHICLE WITH A CAMERA FOR THE RECOGNITION OF LANE MARKINGS
APPAREIL D'ASSISTANCE À LA CONDUITE D'UN VÉHICULE AVEC UNE CAMÉRA POUR L'IDENTIFICATION DES MARQUAGES ROUTIERS

(30) Priorität: 05.10.2009 DE 102009048323
(43) Veröffentlichungstag der Anmeldung: 15.08.2012
(73) Patentinhaber: Conti Temic Microelectronic GmbH, 90411 Nürnberg (DE)
(72) Erfinder: ZOBEL, Matthias, 88142 Wasserburg (DE)
(86) Internationale Anmeldenummer: PCT/DE2010/001124
(87) Internationale Veröffentlichungsnummer: WO 2011/042001

(56) Entgegenhaltungen:
- EP-A1- 1 887 522
- EP-A2- 0 342 345
- DE-A1-102005 029 335
- DE-A1-102007 001 495
- MOHAMMAD OSIUR RAHMAN ET AL: "Real time road sign recognition system using artificial neural networks for bengali textual information box", INFORMATION TECHNOLOGY, 2008. ITSIM 2008. INTERNATIONAL SYMPOSIUM ON, IEEE, PISCATAWAY, NJ, USA, 26. August 2008 (2008-08-26), Seiten 1-8, XP031325875, ISBN: 978-1-4244-2327-9

## Beschreibung

Die Erfindung betrifft ein Fahrerassistenzsystem für ein Kraftfahrzeug mit einer Kamera zur Erkennung von Fahrbahnmarkierungen.

Fahrerassistenzsysteme weisen Funktionen auf, die den Fahrer eines Fahrzeugs bei seinen Fahraufgaben unterstützen. Ziel solcher Systeme ist häufig die Steigerung der Verkehrssicherheit durch Vermeidung von Gefahrensituationen, die zu Unfällen führen können. Weitere Ziele sind Komfortsteigerung durch Entlastung des Fahrers sowie die Erleichterung der Orientierung durch situationsabhängig aufbereitete und fahrergerecht vermittelte Umfeld-Informationen, wie dies bspw. für Assistenzsysteme mit Verkehrszeichenerkennung und/oder Fahrspurerkennung bzw. Fahrbahnmarkierungserkennung bekannt ist.

Verkehrszeichenerkennungsverfahren oder Fahrbahnmarkierungserkennungsverfahren erfassen mittels einer Kamera das Umfeld vor, neben oder hinter dem Fahrzeug, werten die aufgenommenen Bilddaten aus und erkennen in den Bilddaten das Vorhandensein von bestimmten Verkehrszeichen oder Fahrbahnmarkierungen der eigenen und evtl. benachbarter Fahrspuren sowie die Position des eigenen Fahrzeugs relativ zu diesen Fahrbahnmarkierungen. Diese Verkehrszeichen- und/oder Fahrspurinformationen können im Rahmen eines Fahrerassistenzsystems dazu benutzt werden, den Fahrer vor einer Geschwindigkeitsüberschreitung und/oder vor einem Verlassen der Fahrspur zu warnen oder mittels eines Eingriffs in die Längs- und/oder Querregelung das Fahrzeug abzubremsen und/oder in der Spur zu halten.

Ein Fahrerassistenzsystem mit einem Verfahren zur Erkennung von Fahrbahnmarkierungen ist aus der DE 10 2006 007 550 A1 bekannt, das die relative Lage des Fahrzeugs in Bezug auf die erfassten Fahrbahnmarkierungen bestimmt und den Fahrer warnt, wenn die Fahrbahnmarkierung unbeabsichtigt überfahren wird. Bei diesem bekannten Verfahren werden vor allem die vorderen Bereiche des Fahrzeugs sowie die Seitenbereiche der Fahrbahn bzw. der Fahrspur erfasst.

US 6,058,339 A zeigt ein Verfahren zur Steuerung autonomer Fahrzeuge im Rahmen eines automatisierten Transportsystems, z.B. für Baustellen. Das autonome Fahrzeug umfasst hierbei eine Kamera. Die Kamera erfasst vorgegebene Schilder mit Anweisungen zum Ändern der Route oder zum Anhalten für das autonome Fahrzeug und das Fahrzeug setzt diese Anweisungen um.

DE 10 2005 029 335 A1 zeigt ein Verfahren mit den Merkmalen des Oberbegriffs des Patentanspruchs 1. Zur Bestimmung einer von einem Fahrzeug zu befahrenden Wegstrecke werden mit einer Kamera Schilder und Bodenmarkierungen in der Umgebung erkannt, die das Befahren und Abstellen von Fahrzeugen verbieten.

Aufgabe der Erfindung ist es, ein Fahrerassistenzsystem mit einer Kamera zur Erkennung von Fahrbahnmarkierungen derart weiterzubilden, dass dem Fahrer über die Erkennung von Fahrspuren hinaus weitere nutzbare Umfeld-Informationen zur Verfügung gestellt werden.

Diese Aufgabe wird gelöst durch ein Fahrerassistenzsystem mit den Merkmalen des Patentanspruchs 1.

Hiernach ist bei einem Fahrerassistenzsystem für ein Kraftfahrzeug mit einer Kamera zur Erkennung von Fahrbahnmarkierungen erfindungsgemäß eine Einrichtung zur Erkennung eines Park- oder Haltemodus des Fahrzeugs vorgesehen, ferner empfängt im Park- oder Haltemodus des Fahrzeugs ein Steuergerät Bilddaten des Umfelds des Fahrzeugs von der Kamera und wertet diese Bilddaten hinsichtlich Park- und/oder Halteverbote anzeigende Fahrbahnmarkierungen aus, wobei das Steuergerät eine Signalisierungsvorrichtung derart ansteuert, dass die Signalisierungsvorrichtung eine Warnmeldung ausgibt, falls im Umfeld des haltenden oder parkenden Fahrzeugs eine ein Parkverbot oder ein Halteverbot anzeigende Fahrbahnmarkierung detektiert wird.

Ein solches erfindungsgemäßes Assistenzsystem fördert die Orientierung eines Fahrers im Straßenverkehr, insbesondere beim Parken seines Fahrzeugs, da der Fahrer gezielt darauf hingewiesen wird, wenn er sein Fahrzeug in einem Park- oder einem Halteverbot parken möchte, wobei dies auch Park- und Halteverbotszonen umfasst.

Besonders im Hinblick auf ein in Hamburg bis zum Jahr 2013 laufendes Pilotprojekt zur Reduzierung des Schilderwalds im Straßenverkehr kann die Erfindung den Fahrer bei der Parkplatzsuche effektiv unterstützen, da in diesem Pilotprojekt, das bei Erfolg auf das ganze Bundesgebiet ausgedehnt werden soll, Park- und Halteverbotsschilder durch durchgezogene gelbe Farblinien ersetzt werden sollen, die am Fahrbahn- oder Bordsteinrand verlaufen. Solche Fahrbahnmarkierungen könnten an Bushaltestellen, Ladezonen und auf Schutzstreifen für Radfahrer angebracht werden. Auch neben Radfahrwegen sowie an mehrspurigen Ein- und Ausfahrtstraßen oder in Wendeschleifen in Sackgassen könnten solche Farblinien auf die Fahrbahn aufgebracht werden, um Schilderhäufungen zu vermeiden.

Als Einrichtung zur Erkennung des Park- oder Haltemodus des Fahrzeugs kann bspw. ein Detektor verwendet werden, der bei stehendem Fahrzeug die Stellung eines Wählhebels eines automatischen Getriebes detektiert oder ein Detektor, der bei stehendem Fahrzeug den Betriebszustand einer Feststellbremse überwacht. Ferner kann auch als solche Einrichtung das Motorsteuergerät des Fahrzeugs dienen, das bei abgestelltem Motor ein entsprechendes Signal an das Steuergerät sendet.

Die Warnmeldung wird über eine Signalisierungsvorrichtung bzw. eine Anzeigevorrichtung optisch und/oder akustisch ausgegeben, wobei eine solche Signalisierungsvorrichtung das Kombiinstrument des Fahrzeugs darstellen kann oder ein Lautsprecher eines Radios oder einer Freisprechanlage hierfür verwendet wird, für den die Warnmeldung aufbereitet werden kann, bspw. als spezifischer Warnton, oder wenn eine Sprachsteuerung im Fahrzeug vorhanden ist, als gesprochener Warnhinweis.

Gemäß einer vorteilhaften Weiterbildung der Erfindung wertet im Park- oder Haltemodus des Fahrzeugs das Steuergerät die Bilddaten des Umfelds des Fahrzeugs zusätzlich auch hinsichtlich Park- und/oder Haltezonen anzeigende Fahrbahnmarkierungen aus, wobei das Steuergerät die Signalisierungsvorrichtung bzw. die Anzeigevorrichtung derart ansteuert, dass bei einer Detektion einer eine Park- oder Haltezone anzeigende Fahrbahnmarkierung eine Hinweismeldung optisch und/oder akustisch ausgegeben wird. Somit wird der Fahrer auch dann informiert, wenn das Halten oder Parken in einem entsprechend markierten Fahrbahnbereich erlaubt ist.

Besonders vorteilhaft ist es gemäß einer Weiterbildung der Erfindung, wenn das Steuergerät nach Ablauf einer vorgegebenen Zeitdauer, vorzugsweise nach drei Minuten im Zustand des Park- oder Haltemodus die Signalisierungsvorrichtung ansteuert, da in einem eingeschränkten Halteverbot ein Halten bis zu drei Minuten, bspw. zum Be-, Entladen oder Ein- und Aussteigen erlaubt ist.

Gemäß einer weiteren bevorzugten Weiterbildung der Erfindung ist eine weitere Einrichtung vorgesehen, die den Vorgang des Verlassens des Fahrzeugs durch den Fahrer detektiert, wobei das Steuergerät die Signalisierungsvorrichtung bzw. die Anzeigevorrichtung ansteuert, wenn die weitere Einrichtung das Verlassen des Fahrzeugs detektiert. Somit wird der Fahrer beim Verlassen des Fahrzeugs gewarnt, wenn sein Fahrzeug an einem Parkverbot oder in einer Parkverbotszone parkt. Diese weitere Einrichtung könnte bspw. die Schließvorrichtung des Fahrzeugs sein, die ein entsprechendes Signal an das Steuergerät sendet, wenn das Fahrzeug verschlossen wird.

Erfindungsgemäß weist das Fahrzeug eine Einrichtung zur Ortsbestimmung mit einer digitalen Karte auf, vorzugsweise ein Navigationsgerät mit digitaler Karte, so dass das Umfeld des Fahrzeugs im Park- oder Haltemodus in Abhängigkeit des Aufenthaltsortes des Fahrzeugs detektiert wird. So braucht das erfindungsgemäße Assistenzsystem nur in Ortschaften oder Städten aktiviert werden, wodurch die Orientierung des Fahrers bei der Suche von Parkplätzen, insbesondere in größeren Städten erleichtert wird. Auch ist damit eine ortspezifische Anpassung der Erkennung hinsichtlich der Farben oder der Struktur der Markierungen der Park- oder Halteverbote möglich, insbesondere auch hinsichtlich unterschiedlicher Markierungen in verschiedenen Ländern.

Das erfindungsgemäße Assistenzsystem kann in vorteilhafter Weise zu einem System mit Verkehrszeichenerkennung erweitert werden.

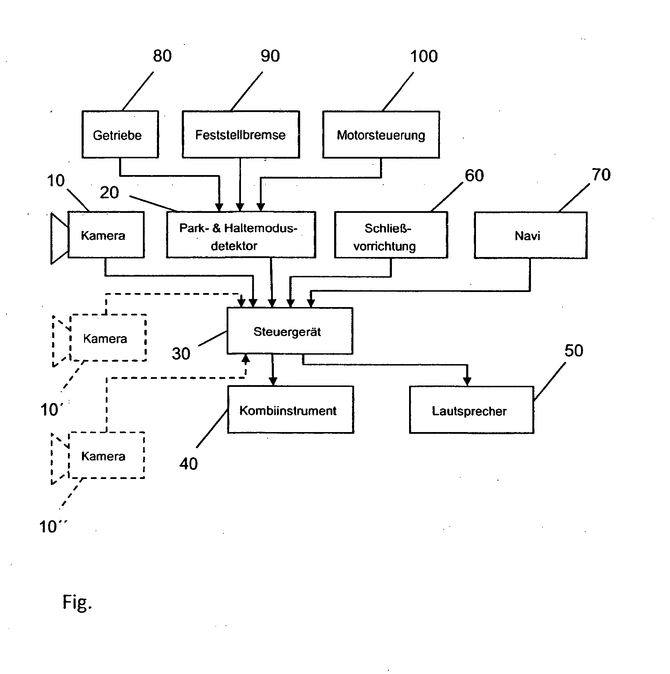

Die Erfindung wird nachfolgend unter Bezugnahme auf die einzige Figur näher erläutert, die ein schematisches Blockschaltbild einer Schaltungsanordnung zur Erläuterung des erfindungsgemäßen Assistenzsystems zeigt.

Das Assistenzsystem nach der Figur umfasst wenigstens eine Kamera 10, die das Umfeld vor dem Fahrzeug erfasst und die Bilddaten einem Steuergerät 30 weiterleitet. Zusätzlich können auch Kameras 10' sowie 10" vorhanden sein, die den seitlichen Bereich des Fahrzeugs detektieren und in der Regel in den Außenspiegeln des Fahrzeugs montiert sind. Die erstgenannte Kamera 10 ist in der Regel in einer zentralen Position im oberen Teil der Windschutzscheibe des Fahrzeugs angebracht. Alternativ dazu ist auch der Einsatz mehrerer Kameras bzw. Bildaufnahmeeinheiten mit unterschiedlichen Blickrichtungen und Einbaupositionen möglich.

Die dem Steuergerät 30 zur Verfügung gestellten Bilddaten werden darauf hin ausgewertet, ob in einem Park- oder Haltemodus des Fahrzeugs Fahrbahnmarkierungen detektiert werden, die entweder ein Park- oder Halteverbot oder eine Park- oder-Halteverbotszone anzeigen.

Um den Park- oder Haltemodus des Fahrzeugs festzustellen, ist ein Park- und Haltemodus-Detektor 20 vorgesehen, der entsprechende Signale von einem Automatikgetriebe 80 und/oder einer Feststellbremse 90 und/oder einer Motorsteuerung 100, in der Regel ein Motorsteuergerät erhält. Das Automatikgetriebe 80 liefert ein Signal, wenn der Wählhebel sich in der Parkposition befindet, die Feststellbremse 90 liefert ein Signal, wenn die Feststellbremse 90 aktiviert ist und die Motorsteuerung 100 liefert bei abgeschaltetem Motor ein Signal an den Park- und Haltemodus-Detektor 20.

Werden von dem Steuergerät 30 Park- oder Halteverbote anzeigende Fahrbahnmarkierungen detektiert, wird eine entsprechende Warnmeldung optisch und/oder akustisch an ein Signalisierungsgerät, hier ein Kombiinstrument 40 und/oder einen Lautsprecher 50 ausgegeben.

Diese Warnmeldung kann auch verzögert, bspw. erst nach drei Minuten nachdem ein Park- und Haltemodus des Fahrzeugs detektiert wurde, ausgegeben werden, da in einem eingeschränkten Halteverbot ein Halten bis zu drei Minuten, bspw. zum Be-, Entladen oder Ein- und Aussteigen erlaubt ist.

Auch wäre es möglich, dem Fahrer erst beim Verlassen des Fahrzeugs die Warnmeldung zu signalisieren. Hierzu gibt eine Schließvorrichtung 60 ein entsprechendes Signal an das Steuergerät 30, wenn das Schließen des Fahrzeugs detektiert wird.

Das Steuergerät 30 kann auch derart ausgelegt sein, dass nicht nur Park- und Halteverbote anzeigende Fahrbahnmarkierungen detektiert werden, sondern auch solche Fahrbahnmarkierungen, die das Halten oder Parken erlauben. Damit kann dem Fahrer zusätzlich über das Kombiinstrument 40 oder den Lautsprecher 50 angezeigt werden, dass sich das Fahrzeug zum Parken oder Halten in einem zulässigen Fahrbahnbereich befindet.

Wenn das Fahrzeug zusätzlich ein Navigationsgerät 70 mit einer digitalen Karte aufweist, wie dies in der Figur dargestellt ist, kann die Funktion der Detektion von Park- oder Halteverbote anzeigende Fahrbahnmarkierungen in Abhängigkeit von dem Aufenthaltsort des Fahrzeugs durchgeführt werden, so z. Bsp. nur in Ortschaften oder Städten. Auch kann eine ortsspezifische Anpassung der Erkennung durchgeführt werden, bspw. hinsichtlich der Farben der zu detektierenden Struktur von Park- und Halteverboten oder Verbotszonen oder auch hinsichtlich deren Muster. Darüber hinaus ist es auch möglich, die Detektion an unterschiedliche Markierungstypen von verschiedenen Ländern anzupassen.

Das beschriebene Assistenzsystem kann idealerweise mit Algorithmen zur Verkehrszeichenerkennung erweitert werden. Weiterhin ist es vorteilhaft die vorhandenen Kameras zur Detektion von Fahrspurmarkierungen einzusetzen und damit Funktionen wie "Spurerkennung", "Spurhalteassistent" oder "Spurwechselunterstützung" zu realisieren.

### Bezugszeichen

- 10: Kamera
- 10': Kamera
- 10'': Kamera
- 20: Park- und Haltemodus-Detektor
- 30: Steuergerät
- 40: Signalisierungsvorrichtung, Kombiinstrument
- 50: Signalisierungsvorrichturig, Lautsprecher
- 60: Schließvorrichtung
- 70: Navigationsgerät
- 80: Getriebe
- 90: Feststellbremse
- 100: Motorsteuerung

## Patentansprüche

1. Fahrerassistenzsystem für ein Kraftfahrzeug mit einer Kamera (10, 10', 10'') zur Erkennung von Fahrbahnmarkierungen, wobei
- eingerichtet ist, ein Steuergerät (30) Bilddaten des Umfelds des Fahrzeugs von der Kamera (10, 10', 10'') zu empfangen und diese hinsichtlich Park- und/oder Halteverbote anzeigende Fahrbahnmarkierungen auszuwerten,
- das Steuergerät (30) eingerichtet ist, eine Signalisierungsvorrichtung (40, 50) derart anzusteuern, dass die Signalisierungsvorrichtung (40, 50) eine Warnmeldung ausgibt, falls im Umfeld des haltenden oder parkenden Fahrzeugs eine ein Parkverbot oder ein Halteverbot anzeigende Fahrbahnmarkierung detektiert wird
- eine Einrichtung (70) zur Ortsbestimmung mit einer digitalen Karte vorgesehen ist, **dadurch gekennzeichnet, dass**
- eine Einrichtung (20) zur Erkennung eines Park- oder Haltemodus des Fahrzeugs vorgesehen ist, und
- die Funktion der Detektion von Park- und Halteverbote anzeigenden Fahrbahnmarkierungen im Park- oder Haltemodus in Abhängigkeit des Aufenthaltsortes des Fahrzeugs durchgeführt wird.

2. Fahrerassistenzsystem nach Anspruch 1,
**dadurch gekennzeichnet, dass**
- im Park- oder Haltemodus des Fahrzeugs das Steuergerät eingerichtet ist, (30) die Bilddaten des Umfelds des Fahrzeugs hinsichtlich Park- und/oder Haltezonen anzeigende Fahrbahnmarkierungen auszuwerten, und
- das Steuergerät (30) eingerichtet ist, die Signalisierungsvorrichtung (40, 50) derart anzusteuern, dass bei einer Detektion einer eine Park- oder Haltezone anzeigende Fahrbahnmarkierung eine Hinweismeldung ausgegeben wird.

3. Fahrerassistenzsystem nach Anspruch 1 oder 2,
**dadurch gekennzeichnet, dass**
das Steuergerät (30) eingerichtet ist, nach Ablauf einer vorgegebenen Zeitdauer, vorzugsweise nach drei Minuten im Zustand des Park- oder Haltemodus die Signalisierungsvorrichtung (40, 50) anzusteuern.

4. Fahrerassistenzsystem nach einem der vorhergehenden Ansprüche,
**dadurch gekennzeichnet, dass**
eine weitere Einrichtung (60) eingerichtet ist, den
Vorgang des Verlassens des Fahrzeugs durch den Fahrer zudetektierer, und
- das Steuergerät (30) eingerichtet ist, die Signalisierungsvorrichtung (40, 50) anzusteuern, wenn die weitere Einrichtung (60) das Verlassen des Fahrzeugs detektiert.

5. Fahrerassistenzsystem nach einem der vorhergehenden Ansprüche,
**dadurch gekennzeichnet, dass**
das Umfeld des Fahrzeugs im Park- oder Haltemodus nur in Ortschaften und Städten detektiert wird.

6. Fahrerassistenzsystem nach einem der vorhergehenden Ansprüche,
**dadurch gekennzeichnet, dass** es eingerichtet ist,
mittels der Kamera und Algorithmen zur Verkehrszeichenerkennung eine Verkehrszeichenerkennung durchzuführen.

## Claims

1. A driver assistance system for a motor vehicle having a camera (10, 10', 10") for detecting road surface markings, wherein
- a control unit (30) is arranged to receive image data of the surroundings of the vehicle from the camera (10, 10', 10") and to analyse said data with respect to road surface markings indicating parking and/or stopping restrictions;
- the control unit (30) is arranged to control a signalling device (40, 50) such that the signalling device (40, 50) outputs a warning message if a road surface marking indicating a parking restriction or stopping restriction is detected in the surroundings of the stopping or parking vehicle;
- a device (70) for localisation with a digital map is provided,
**characterized in that**
- a device (20) for detecting a park or stop mode of the vehicle is provided; and
- the function of detecting road surface markings indicating parking and stopping restrictions is performed in the park or stop mode depending on the position of the vehicle.

2. The driver assistance system according to claim 1,
**characterized in that**
- in the park or stop mode of the vehicle, the control unit (30) is arranged to analyse the image data of the surroundings of the vehicle with respect to road surface markings indicating parking and/or stopping zones; and
- the control unit (30) is arranged to control the signalling device (40, 50) such that an information message is output when a road surface marking indicating a parking or stopping zone is detected.

3. The driver assistance system according to claim 1 or 2,
**characterized in that**
the control unit (30) is arranged to control the signalling device (40, 50) after the expiration of a predetermined period of time, preferably after three minutes in the state of the parking or stopping mode.

4. The driver assistance system according to any one of the preceding claims,
**characterized in that**
a further device (60) is arranged to detect the process of the driver leaving the vehicle; and
- the control unit (30) is arranged to control the signalling device (40, 50) when the further device (60) detects that the vehicle is being left.

5. The driver assistance system according to any one of the preceding claims,
**characterized in that**
the surroundings of the vehicle in the park or stop mode is only detected in towns and cities.

6. The driver assistance system according to any one of the preceding claims,
**characterized in that**
it is arranged to perform a traffic sign detection by means of the camera and algorithms for traffic sign detection.

## Revendications

1. Système d'assistance du conducteur pour un véhicule automobile comportant une caméra (10, 10', 10") pour la reconnaissance de marquages routiers, dans lequel
- un appareil de commande (30) est installé pour recevoir des donnée d'image du champ périphérique du véhicule depuis la caméra (10, 10', 10") et pour analyser celles-ci en ce qui concerne des marquages routiers indiquant des interdictions de stationnement et/ou d'arrêt ;
- l'appareil de commande (30) est installé pour commander un dispositif de signalisation (40, 50) de telle manière que ce dispositif de signalisation (40, 50) sorte un message d'avertissement si un marquage routier indiquant une interdiction de stationnement ou d'arrêt est détecté dans le champ périphérique du véhicule en stationnement ou à l'arrêt ;
- un dispositif (70) de localisation avec un plan digital est prévu,
**caractérisé en ce que**
- un dispositif (20) de reconnaissance d'un mode stationnement ou arrêt du véhicule est prévu ; et
- dans le mode stationnement ou arrêt, la fonction de détection de marquages routiers indiquant des interdictions de stationnement et d'arrêt est exécutée en fonction de la position du véhicule.

2. Système d'assistance du conducteur selon la revendication 1,
**caractérisé en ce que**
- dans le mode stationnement ou arrêt du véhicule, l'appareil de commande (30) est installé pour analyser les données d'image du champ périphérique du véhicule en ce qui concerne les marquages routiers indiquant des zones de stationnement et/ou d'arrêt ; et
- l'appareil de commande (30) est installé pour commander le dispositif de signalisation (40, 50) de telle manière qu'un message d'indication est sorti en cas de détection d'un marquage routier indiquant une zone de stationnement et/ou d'arrêt.

3. Système d'assistance du conducteur selon la revendication 1 ou 2,
**caractérisé en ce que**
l'appareil de commande (30) est installé pour commander le dispositif de signalisation (40, 50) après l'expiration d'une durée prédéterminée, préférablement après trois minutes dans l'état du mode stationnement ou arrêt.

4. Système d'assistance du conducteur selon l'une quelconque des revendications précédentes, **caractérisé en ce que**
un autre dispositif (60) est installé pour détecter le fait que le conducteur quitte le véhicule ; et
- l'appareil de commande (30) est installé pour commander le dispositif de signalisation (40, 50) lorsque l'autre dispositif (60) détecte le fait que le conducteur quitte le véhicule.

5. Système d'assistance du conducteur selon l'une quelconque des revendications précédentes, **caractérisé en ce que**
- le champ périphérique du véhicule dans le mode stationnement ou arrêt n'est détecté que dans les villages et les villes.

6. Système d'assistance du conducteur selon l'une quelconque des revendications précédentes, **caractérisé en ce que**
il est installé pour réaliser une reconnaissance des signalisations routières au moyen de la caméra et des algorithmes pour une reconnaissance des signalisations routières.
